# EUROPEAN PATENT APPLICATION

(11) **EP 4 553 537 A1**
(43) Date of publication of application: **14.05.2025**
(21) Application number: 23834643.1
(22) Date of filing: 25.06.2023
(51) Int. Cl.: G01S 7/497, G01S 17/88

(54) **LEVELNESS VERIFICATION METHOD, TERMINAL, AND COMPUTER-READABLE STORAGE MEDIUM**

(30) Priority: 04.07.2022 CN 202210776769
(71) Applicant: ZTE Corporation, Shenzhen, Guangdong 518057 (CN)
(72) Inventor: DONG, Pengfei, Shenzhen, Guangdong 518057 (CN)
(74) Representative: Chimini, Francesco
(86) International application number: PCT/CN2023/102237
(87) International publication number: WO 2024/007869

(57) **Abstract**

The application discloses a levelness verification method, a terminal, and a computer-readable storage medium. The method includes: acquiring point cloud data of a current scanning direction angle (S101); extracting a plurality of feature object point sets from the point cloud data (S102); obtaining a plurality of pieces of scanned feature object information according to the plurality of feature object point sets (S103); and comparing the plurality of pieces of scanned feature object information with preset feature object information to obtain a levelness check result of the current scanning direction angle (S104).

## Description

### Cross-Reference to Related Application

The disclosure is based on Chinese Patent Application No. 202210776769.7 filed on July 04, 2022 and claims the priority to the Chinese Patent Application, which is incorporated herein in its entirety by reference.

### Technical Field

Examples of the application relate to, but are not limited to, the technical field of laser radars, in particular to a levelness verification method, a terminal, and a computer-readable storage medium.

### Background

With the development of industrial intelligence, navigation robots have been attracting increasing attention. The existing navigation robots are generally equipped with single-line laser radars. The laser radars emit laser beams, and receive the surrounding information returned based on the laser beams, thereby sensing surrounding environment and obstacle information, and providing data for robot navigation. However, a navigation robot is generally mounted with a single-line laser radar, and a scanning region of the single-line laser radar is a two-dimensional plane. During use, it is often necessary to keep the scanning plane parallel to the ground so as to correctly sense the surrounding environment and obstacles, and thus it is necessary to check the installation level of the single-line laser radar. However, current common methods for checking levelness are low in check accuracy and highly limited in scenario, or are complicated in check process and difficult to operate. That is, the current common method for checking the mounting levelness of the single-line laser radar cannot guarantee accuracy while simplifying the check process.

### Summary

A summary of a subject matter described herein in detail will be provided below. This summary is not intended to limit the protection scope of the claims.

Examples of the application provide a method for checking levelness, a terminal, and a computer-readable storage medium.

In a first aspect, the examples of the application provide a levelness verification method. The method includes: point cloud data of a current scanning direction angle are acquired; a plurality of feature object point sets are extracted from the point cloud data; a plurality of pieces of scanned feature object information are obtained according to the plurality of feature object point sets; and the plurality of pieces of scanned feature object information are compared with preset feature object information to obtain a levelness check result of the current scanning direction angle.

In a second aspect, the examples of the application provide a terminal. The terminal includes: a memory, a processor, and a computer program that is stored on the memory and runnable on the processor, where the processor is configured to cause, when executed by a processor, the processor to perform the method for checking levelness according to the first aspect.

In a third aspect, the examples of the application provide a computer-readable storage medium. The computer-readable storage medium stores a computer-executable program, where the computer-executable program is configured to cause a computer to execute the levelness verification method according to the first aspect.

Other features and advantages of the application will be set forth in the following description, and will partially become apparent in the description, or will be learned by implementing the application. Objectives and other advantages of the application can be achieved and obtained through structures particularly indicated in the description, the claims and accompanying drawings.

### Brief Description of the Drawings

Fig. 1 is a flowchart of a levelness verification method according to an example of the application;
Fig. 2 is a sub-flowchart of a levelness verification method according to an example of the application;
Fig. 3 is another sub-flowchart of a levelness verification method according to an example of the application;
Fig. 4 is yet another sub-flowchart of a levelness verification method according to an example of the application;
Fig. 5 is yet another sub-flowchart of a levelness verification method according to an example of the application;
Fig. 6 is still another sub-flowchart of a levelness verification method according to an example of the application;
Fig. 7 is a schematic structural diagram of a levelness verification method according to an example of the application; and
Fig. 8 is a schematic structural diagram of a terminal according to an example of the application.

The accompanying drawings are used for providing further understanding of the technical solution of the application as a constituent part of the description, serve to explain the technical solution of the application together with examples of the application, but do not constitute limitation to the technical solution of the application.

### Detailed Description of the Embodiments

In order to make objectives, technical solutions, and advantages of the application clearer, the application will be further described below in detail with reference to accompanying drawings and examples. It should be understood that specific examples described herein are merely used to explain the application rather than limit the application.

It should be understood that in the description of the examples of the application, the term plurality (or a plurality of items) indicates more than two, the terms more than, less than, above, etc. are understood as excluding this number, and the terms not less than, not more than, within, etc. are understood as including this number. The terms "first", "second", etc., if described, are merely used for distinguishing technical features, and cannot be understood as indicating or implying relative importance or implicitly indicating the number of indicated technical features or implicitly indicating the sequential order of indicated technical features.

The examples of the application provide a levelness verification method, a terminal, and a computer-readable storage medium. Point cloud data of a current scanning direction angle are acquiried. A plurality of feature object point sets are extracted from the point cloud data. A plurality of pieces of scanned feature object information are obtained according to the plurality of feature object point sets. The plurality of pieces of scanned feature object information are compared with preset feature object information to obtain a levelness check result of the current scanning direction angle. Based on this, a laser radar outputs a scanning laser, receives the point cloud data returned based on the scanning laser, and segments the point cloud data into the plurality of feature object point sets. Each of the feature object point sets may correspond to one feature object, then features are extracted according to the feature object point sets, and the plurality of pieces of scanned feature object information is obtained. Then, the scanned feature object information is compared with actual information of the preset feature. When a scanning plane is level, the actual information of the preset feature may be restored from the scanned feature object information. That is, when the scanned feature object information is consistent with the preset feature object information, the scanning plane is level. When the scanned feature object information is inconsistent with the preset feature object information, the scanning plane inclines to a particular degree. On the premise of ensuring accuracy of levelness check, a check process is greatly simplified.

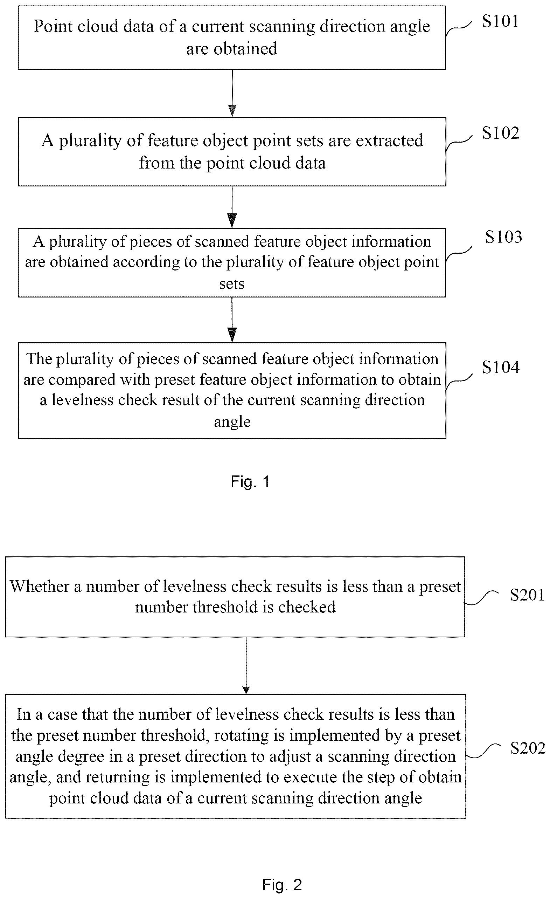

As shown in Fig. 1, Fig. 1 is a flowchart of a levelness verification method according to an example of the application. The levelness verification method includes, but is not limited to:
S101, point cloud data of a current scanning direction angle are obtained.
S102, a plurality of feature object point sets are extracted from the point cloud data.
S103, a plurality of pieces of scanned feature object information are obtained according to the plurality of feature object point sets.
S104, the plurality of pieces of scanned feature object information are compared with preset feature object information to obtain a levelness check result of the current scanning direction angle.

It can be understood that the point cloud data are data generated after a single-line laser radar emits a laser to scan a feature object and then the feature object reflects to a receiving area of the single-line laser radar. The point cloud data includes a plurality of signal points and corresponding spatial coordinates of each signal point. In an example, by computing a time difference between time when the single-line laser radar emits the laser and time when the single-line laser radar receives a laser signal reflected from the scanned feature object to the single-line laser radar, a distance between the object reflecting a signal point and the single-line laser radar may be computed. In an example, a laser speed emitted by the radar, that is, a light speed, is a constant value, and a product of the light speed and the time difference is twice the size of the distance between the single-line laser radar and the object reflecting the signal point. Combined with an angle at which the single-line laser radar receives the signal point, a position of the object reflecting the signal point relative to the single-line laser radar may be computed. Based on this, a corresponding coordinate system may be established and the position of the signal point may be projected into the coordinate system, and indicated in the form of spatial coordinates.

It can be understood that a plurality of feature objects levelly placed at the same height exist in the space, and the point cloud data obtained through laser scanning include point cloud data returned when the laser scans the background, that is, a wall, and further include point cloud data returned when the laser scans the feature object. Thus, the point cloud data returned by the background need to be filtered out from the point cloud data to obtain the feature points, and then the point cloud data returned by different feature objects are extracted to form feature object point sets each corresponding to one feature object.

It can be understood that after the feature object point sets each corresponding to one feature object are extracted, feature points in the same feature object point set may be processed to extract corresponding scanned feature object information. The scanned feature object information is the feature object information restored according to the point cloud data obtained after the laser radar scans the feature object. Since the scanning plane of the single-line laser radar is a two-dimensional plane, the returned point cloud data may establish various lines after the laser scans the feature object. Thus, the scanned feature object information including a length of a line segment, a degree of an included angle between two line segments and a curvature of a curve may be computed.

It can be understood that the plurality of feature object point sets are extracted from the point cloud data. Each feature object point set corresponds to one scanned feature object. Thus, a number of scanned feature objects may be determined according to a number of feature object point sets. Based on this, the number of scanned feature objects is compared with an actual number of preset feature objects. When the number of scanned feature objects is unequal to the actual number of preset feature objects, that is, when the number of scanned feature objects is less than the actual number of preset feature objects, it means that the laser radar cannot scan all preset feature objects placed levelly at the same height, the scanning plane is inclined in this case, and mounting levelness of the laser radar is unqualified. The point cloud data include the spatial coordinates of the signal points, and the position of the feature object in the space may be computed according to the spatial coordinates of the signal points. In an example, an average of spatial coordinates of all feature points in the same feature object point set is computed as the spatial coordinates of the scanned feature objects, and a spatial distribution of the scanned feature objects may be analyzed according to the spatial coordinates of the plurality of scanned feature objects. The spatial distribution is compared with an actual spatial distribution of the preset feature objects. When the laser radar is levelly mounted on a carrier, the spatial distribution of the scanned feature objects coincide with the actual spatial distribution of the preset feature objects. After the scanned feature object information is obtained, the scanned feature object information may be compared with the preset feature object information. In an example, whether the laser radar is mounted levelly can be determined by comparing the length of the line segment obtained by scanning the feature object with an actual length of the preset feature object, comparing the degree of the included angle between the plurality of line segments formed from the point cloud data obtained by scanning the feature object with a degree of an included angle between line segments in a level section of the preset feature object, or comparing the curvature of the curve obtained by scanning the feature object with a curvature of a curve in the level section of the preset feature object. Thus, the check process can be greatly simplified on the premise of ensuring the check accuracy of the mounting levelness of the laser radar.

As shown in Fig. 2, Fig. 2 is a flowchart of a levelness verification method according to an example of the application. After S104, the method includes, but is not limited to, the following steps:
S201, whether a number of levelness check results is less than a preset number threshold is checked.
S202, in a case that the number of levelness check results is less than the preset number threshold, rotating is implemented by a preset angle degree in a preset direction to adjust a scanning direction angle, and returning is implemented to execute the step of obtain point cloud data of a current scanning direction angle.

It can be understood that in S101 to S104, the levelness check result obtained is merely a levelness check result when the laser radar faces a particular scanning direction angle. In order to ensure the levelness check accuracy, levelness check results corresponding to case where the laser radar face different directions should be obtained, to sense whether the laser radar is levelly mounted in directions. In an example, S101 to S104 may be repeatedly executed after the laser radar is rotated by the preset angle degree in the preset direction. For example, S101 to S104 may be repeatedly executed after the laser radar is rotated by 45° clockwise until the laser radar rotates by a circle. In an example, a number of rotations of the laser radar needed may be determined according to the preset angle degree, and the preset number threshold of the levelness check result may be determined according to the number of rotations of the laser radar needed. For example, when the preset angle degree is 45°, the laser radar needs to rotate 7 times, and eight levelness check results corresponding to rotations by 0°, 45°, 90°, 135°, 180°, 225°, 270° and 315° of the laser radar are obtained respectively. Thus, it can be determined that the preset number threshold of the levelness check results is 8. Based on this, when the number of levelness check results is less than 8, the laser radar is controlled to rotate 45 clockwise and then S101 to S104 are repeatedly executed.

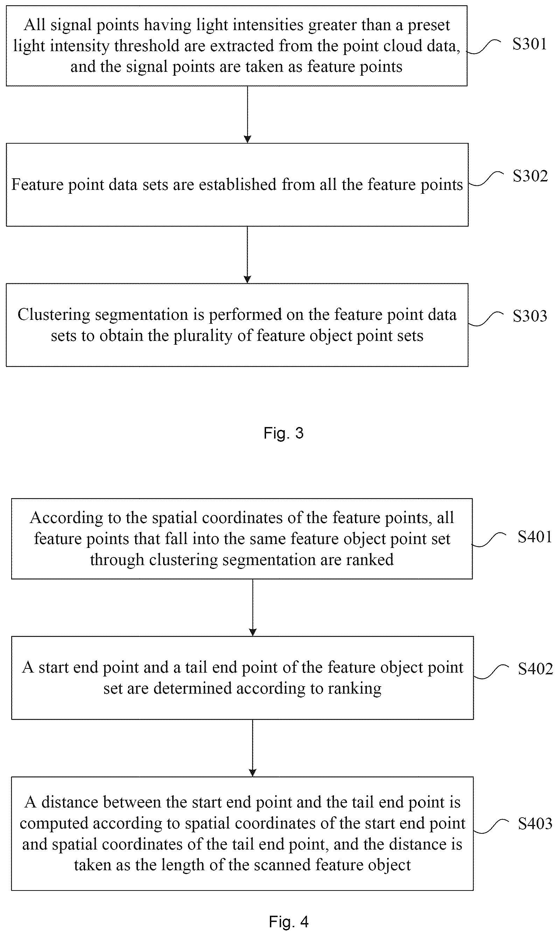

As shown in Fig. 3, Fig. 3 is another sub-flowchart of a levelness verification method according to an example of the application. S102 may include, but is not limited to, the following steps:
S301, all signal points having light intensities greater than a preset light intensity threshold are extracted from the point cloud data, and the signal points are taken as feature points.
S302, feature point data sets are established from all the feature points.
S303, clustering segmentation is performed on the feature point data sets to obtain the plurality of feature object point sets.

It can be understood that the preset feature objects may be a plurality of rectangular reflectors placed on the same level surface. After the scanning laser emitted by the single-line laser radar scans the reflectors, the signal points reflected by the reflectors have higher light intensities than signal points reflected by the background in the environment. By setting the light intensity threshold, the points having the high light intensity, that is, the signal points reflected by the reflectors, in the point cloud data, may be extracted.

It can be understood that after the signal points emitted by the reflector are extracted from the point cloud data based on the light intensity threshold, one feature point data set is obtained. In the environment, the plurality of reflectors may be arranged, and the feature point data set needs to be subjected to the clustering segmentation into the feature object point sets each corresponding to one preset feature object. Since the plurality of reflectors are separated from one another, and feature points reflected by the same reflector are continuous, distances between a feature point to be classified and all feature points in a particular feature object point set may be computed. When the distances between the feature point to be classified and all the points in this feature object point set are greater than the preset threshold, it means that the feature point to be classified does not belong to the feature object point set. When a distance between one point in the feature object point set and the feature point to be classified is smaller than the preset distance threshold, it means that the feature point to be classified belongs to the feature object point set. Thus, a set of points denoting the scanned feature objects may be obtained. In an example, the distance between two points may be obtained by computing a modulus of a vector formed from two points. In an example, a first feature point is selected, distances between the remaining feature points in the feature point data set and the first feature point are computed, and a second feature point that has a distance with the first feature point smaller than the preset distance threshold, and the first feature point are classified into a first feature object point set. Then, distances between the remaining feature points in the feature point data set, that is, all feature points except the first feature point and the second feature point, and the second feature point are computed. A third feature point that has a distance with the second feature point smaller than the preset distance threshold is also classified into the first feature object point set, the steps are repeated until distances between the remaining feature points in the feature point data set and all points in the first feature object point set are greater than the preset distance threshold. Thus, the first feature object point set is obtained. Then, a feature point is selected from the remaining feature points to be classified in the feature point data set and the steps described above are repeated until all the feature points in the feature point data set are classified into corresponding feature object point sets. In some feasible examples, all feature points to be classified within a preset radius of the first feature point may be further searched for through a K-nearest neighbors algorithm, and then distances between the feature points to be classified within the preset radius and the first feature point are computed. Thus, a feature point that is far away from the first feature point, that is, belongs to a different feature object point set certainly relative to the first feature point, can be filtered out, and a computation amount of the clustering segmentation is reduced accordingly.

It can be understood that in order to reduce the computation amount of the clustering segmentation, Since a scanning plane of a single-line laser radar is a two-dimensional plane, and a feature point reflected by the same reflector is also a plurality of continuous points, the plurality of reflectors are respectively placed at different orientations on the same level surface, and the feature points are sorted according to a certain direction. For example, a point at a boundary of the scanning plane is determined as a starting point, and the feature points are ranked clockwise. Then a distance between a first feature point and a second feature point ranked adjacent to the first feature point is computed. If the distance between the first feature point and the second feature point is greater than the preset distance threshold, it means that the first feature point and the second feature point are a left end point and a right end point of two feature object point sets respectively, that is, the first feature point and the second feature point belong to different feature object point sets.

It can be understood that after the feature points in the point cloud data are segmented into the feature object point sets corresponding to the plurality of scanned feature objects, the number of feature object point sets is the number of scanned feature objects, and the number of scanned feature objects is compared with the actual number of preset feature objects. Since the preset feature objects are placed on the same level surface, and the laser scanning plane of the laser radar is also be a level surface if the laser radar is mounted levelly, all preset feature objects can be scanned. Thus, the number of feature object point sets is equal to the actual number of preset feature objects. When the number of feature object point sets is unequal to the actual number of preset feature objects, it can be considered that the laser scanning plane is not a level surface, that is, the laser radar is not mounted levelly.

It can be understood that after the feature points in the point cloud data are segmented into the feature object point sets corresponding to the plurality of scanned feature objects, the spatial coordinates of the feature object may be obtained according to the average of the spatial coordinates of all points in the same feature object point set. When the single-line laser radar is mounted levelly, the averages of the spatial coordinates of all feature points in the feature object point sets are coordinates of midpoints of line segments formed from the feature object point set, and coordinates of midpoints should completely coincide with coordinates of geometric centers mapped to the two-dimensional scanning plane by the rectangular reflectors. When the laser radar is not mounted levelly, coordinates of midpoints of a plurality of line segments obtained by scanning a plurality of features cannot completely coincide with the coordinates of the midpoints of the plurality of line segments in a case of level scanning. That is, the spatial coordinates of the scanned feature objects in a case that the laser radar is not mounted levelly cannot coincide with the spatial coordinates of the scanned feature objects in a case that the laser radar is mounted levelly. Thus, whether the laser radar is mounted levelly may be determined by determining, through comparison, whether the spatial coordinates of the scanned feature objects coincide with the spatial coordinates of the preset feature objects.

As shown in Fig. 4, 103 may include, but is not limited to, the following steps:
S401, according to the spatial coordinates of the feature points, all feature points that fall into the same feature object point set through clustering segmentation are ranked.
S402, a start end point and a tail end point of the feature object point set are determined according to ranking.
S403, a distance between the start end point and the tail end point is computed according to spatial coordinates of the start end point and spatial coordinates of the tail end point, and the distance is taken as the length of the scanned feature object.

It can be understood that after the feature points in the point cloud data are segmented into the feature object point sets corresponding to the plurality of scanned feature objects, the feature points collected after the scanning plane of the single-line laser radar scans the plurality of scanned feature objects (that is, the reflectors) may form a plurality of line segments. Each line segment corresponds to each reflector, and lengths of these lines are compared with actual lengths of corresponding reflectors, so as to determine whether the laser radar is mounted levelly. In an example, if the laser radar is mounted levelly, the scanning plane of the laser radar should be a level surface. When the level scanning plane scans a levelly placed rectangular reflector, the line segment formed by the scanned feature object point sets through scan should be parallel and equal to a long side of the reflector. Thus, if a difference between a length of the line segment formed by a particular feature object point set and the actual length of the reflector is greater than a preset difference threshold, it means that the laser radar is not mounted levelly. In an example, after the feature point data set is subjected to the clustering segmentation to obtain the plurality of feature object point sets, all the feature points in the same feature object point set are ranked clockwise according to the spatial coordinates of the feature points. Thus, the start end point and the tail end point of the line segment formed from the feature points may be determined, and the length of the line segment formed from the feature object point sets may be computed by computing the modulus of the vector formed from two end points.

It can be understood that the preset feature objects may alternatively be reflectors with different lengths. For example, the preset feature objects are a plurality of reflectors that have lengths of 20 centimeters and 30 centimeters and are arranged at intervals. After the feature points are expressed in the form of spatial coordinates and the feature points are subjected to clustering segmentation to obtain the feature object point set, a spatial distribution of the scanned feature objects may be obtained by computing the average of the spatial coordinates of all the feature points in the same feature object point set. Combined with the length of the line segment formed from the feature object point set, whether the spatial distribution of the scanned feature objects conforms to a distribution arrangement of the preset feature objects may be checked. That is, whether the scanned feature objects are the reflectors that have the lengths of 20 centimeters and the lengths of 30 centimeters and are arranged at intervals.

It can be understood that in a case that at least one of conditions that the spatial coordinates of the scanned feature objects do not coincide with the spatial coordinates of the preset feature objects, and a difference between the length of the scanned feature objects and the length of the preset feature objects is greater than a preset length difference threshold occurs, it is determined that the levelness check result of the current scanning direction angle is unqualified.

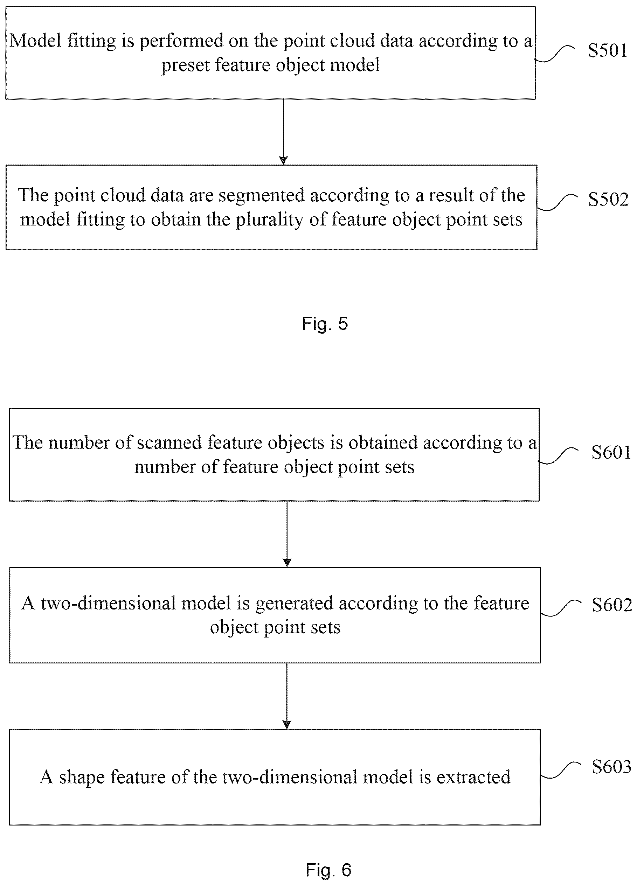

As shown in Fig. 5, S102 may further include, but is not limited to, the following steps:
S501, model fitting is performed on the point cloud data according to a preset feature object model.
S502, the point cloud data are segmented according to a result of the model fitting to obtain the plurality of feature object point sets.

It can be understood that the preset feature objects may be a plurality of feature objects that have a specific shape placed on the same level surface, for example, V-shaped feature objects. It should be pointed out that the feature objects are columns that are levelly placed and have the same level section at any height. When the laser radar scans the feature object, and point cloud data returned are mapped to a coordinate system, a distribution of the point cloud in the coordinate system presents a shape of the level section of the feature object. Through a model-based segmentation algorithm, the point cloud data are segmented with a geometric form mathematical model of the feature object as prior knowledge. In an example, point cloud data that satisfy a preset mathematical expression are classified into the same point set. With the V-shaped feature object as an example, a mathematical expression of the feature object is|y| = a|x -b| + c or |x| = a|y -b| + c. In the expression, a, b and c denote constant coefficients, and x and y denote an abscissa and an ordinate of a point on an image corresponding to the preset mathematical expression respectively. When a function corresponding to a two-dimensional image obtained through fitting on a plurality of signal points in the point cloud data conforms to the mathematical expression, the point cloud data of this part are classified into the same feature object point set. Thus, the plurality of feature object point sets may be extracted from the point cloud data.

As shown in Fig. 6, S103 may further include, but is not limited to, the following steps:
S601, the number of scanned feature objects is obtained according to a number of feature object point sets.
S602, a two-dimensional model is generated according to the feature object point sets.
S603, a shape feature of the two-dimensional model is extracted.

It can be understood that the feature object point sets are obtained by performing model fitting and segmentation on the point cloud data.

It can be understood that after the point cloud data of the section of the scanned feature object are extracted according to the preset data expression and segmented into the plurality of feature object point sets, the feature points in the same feature object point set may form a line segment reflecting a section profile of the feature object, and the shape feature of the scanned feature object may be determined according to the line segment of the section profile. The shape feature includes, but is not limited to, a length of the line segment, a curvature of a curve, and a degree of an included angle formed between a plurality of line segments. With the V-shaped feature object as an example, all feature points in the feature object point set compose two line segments that have the same length and intersect at the same end point. Based on this, a length of the two line segments and a degree of an included angle formed by the two line segments are computed. In an example, the length of the line segment may be obtained by extracting feature points at two ends of the line segment and computing a modulus length of a vector formed from the feature points at the two ends. An included angle of two vectors formed from start end points and tail end points of the two line segments may be computed by a plane vector included angle computation formula, and an included angle of the V-shaped feature object may be obtained.

It can be understood that after the shape feature of the scanned feature object is extracted, the shape feature may be compared with an actual shape feature of the preset feature object. With the V-shaped feature object as an example, a length of two sides of the preset V-shaped feature object is 30 centimeters, and an included angle between the two sides is 120°. When the laser radar is mounted levelly, the scanning plane scans a level cross section of the V-shaped feature object, and scanned point cloud data also present a "V" shape that has two sides with the length of 30 centimeters and the included angle formed between the two sides of 120°. When the laser radar is mounted in an inclined way, a scanning plane inclines accordingly, and scans an inclined section of the V-shaped feature object, and returned point cloud data may present a "V" shape that has a side longer than 30 centimeters and the included angle formed between two sides greater than 120°. Based on this, whether the laser radar is mounted levelly may be determined by comparing the shape feature of the scanned feature objects with the actual shape feature of the preset feature objects.

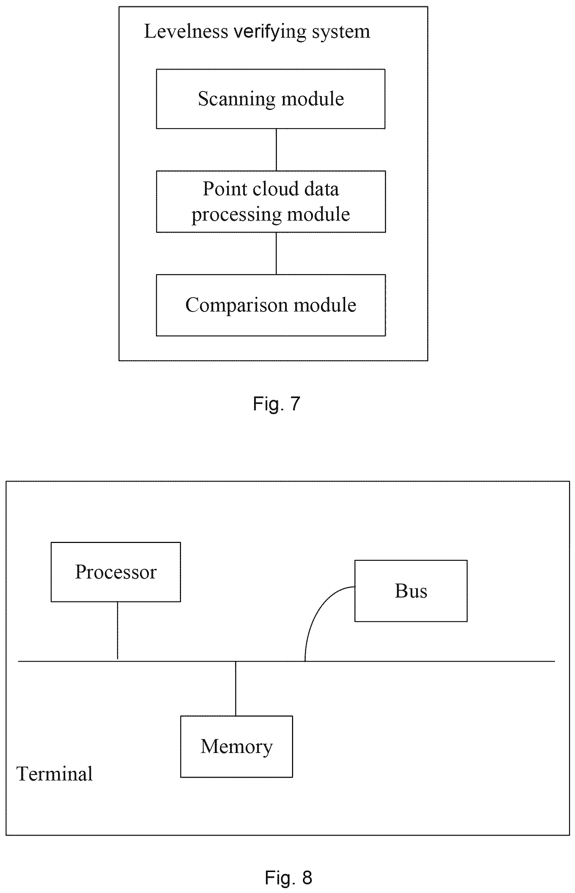

As shown in Fig. 7, the example of the application further provides a levelness verification method.

The levelness verification method includes a scanning module, a point cloud data processing module, and a comparison module. The scanning module is configured to output a scanning laser, and receive point cloud data returned based on the scanning laser. The point cloud data processing module is configured to process the point cloud data obtained by the scanning module, extract a feature point returned by the laser scanning a feature object and a noise point obtained by a laser radar scanning a background from the point cloud data, process the feature point, and extract scanned feature object information. The comparison module is configured to compare the scanned feature object information with preset feature object information to obtain a check result. When the laser radar is mounted levelly, a scanning plane of the laser radar is a level surface, and information of a level section of the feature object may be restored from the point cloud data returned after the feature object is scanned. Based on this, whether the laser radar is mounted levelly can be determined by comparing the scanned feature object information extracted from the point cloud data with actual information of a preset feature object.

As shown in Fig. 8, the examples of the application further provide a terminal.

In an example, the terminal includes: one or more processors and memories, with one processor and one memory as an example in Fig. 8. The processor and the memory may be connected to each other through a bus or by other means, and connection through the bus is taken as an example in Fig. 8.

The memory, a non-transitory computer-readable storage medium, may be configured to store a non-transitory software program, and a non-transitory computer-executable program, such as the levelness verification method in the example described above of the application. The processor implements the levelness verification method in the example described above of the application by running the non-transitory software program and the program stored in the memory. For example, S101 to S104 in Fig. 1, S201 to S202 in Fig. 2, S301 to S303 in Fig. 3, S401 to S403 in Fig. 4, S501 to S502 in Fig. 5 and S601 to S603 in Fig. 6 are executed. The laser radar outputs the scanning laser, receives the point cloud data returned based on the scanning laser, and segments the point cloud data into a plurality of feature object point sets. Each of the feature object point sets may correspond to one feature object, then features are extracted according to the feature object point sets, and the plurality of pieces of scanned feature object information is obtained. Then, the scanned feature object information is compared with actual information of the preset feature. When a scanning plane is level, actual information of the preset feature may be restored from the scanned feature object information. That is, when the scanned feature object information is consistent with the preset feature object information, the scanning plane is level. When the scanned feature object information is inconsistent with the preset feature object information, the scanning plane inclines to a particular degree. On the premise of ensuring accuracy of levelness check, a check process is greatly simplified.

The memory may include a program storage area and a data storage area. The program storage area may store an operating system, and an application required for at least one function. The data storage area may store data, etc. required for executing the levelness verification method in the example described above of the application. In addition, the memory may include a high-speed random access memory, and may further include a non-transitory memory such as at least one disk storage device, a flash storage device or a different non-transitory solid-state storage device. In some embodiments, the memory may include memories that are remotely arranged relative to the processor, and these remote memories may be connected to the terminal through a network. Instances of the network described above include, but are not limited to, the Internet, an Intranet, a local area network, a mobile communication network and their combinations.

A non-transitory software program and a program required for implementing the levelness verification method in the examples described above of the application are stored in the memory, and executes the levelness verification method in the examples described above of the application when executed by one or more processors.

In addition, the examples of the application further provide a computer-readable storage medium. The computer-readable storage medium stores a computer-executable program. The computer-executable program may cause one or more processors to execute the levelness verification method in the examples described above of the application when executed by the one or more control processors, for example, by the processor in Fig. 8. For example, S101 to S104 in Fig. 1, S201 to S202 in Fig. 2, S301 to S303 in Fig. 3, S401 to S403 in Fig. 4, S501 to S502 in Fig. 5 and S601 to S603 in Fig. 6 are executed. The laser radar outputs the scanning laser, receives the point cloud data returned based on the scanning laser, and segments the point cloud data into a plurality of feature object point sets. Each of the feature object point sets may correspond to one feature object, then features are extracted according to the feature object point sets, and the plurality of pieces of scanned feature object information is obtained. Then, the scanned feature object information is compared with actual information of the preset feature. When a scanning plane is level, actual information of the preset feature may be restored from the scanned feature object information. That is, when the scanned feature object information is consistent with the preset feature object information, the scanning plane is level. When the scanned feature object information is inconsistent with the preset feature object information, the scanning plane inclines to a particular degree. On the premise of ensuring accuracy of levelness check, a check process is greatly simplified.

The example of the application includes: point cloud data of a current scanning direction angle are obtained. The plurality of feature object point sets are extracted from the point cloud data. The plurality of pieces of scanned feature object information is obtained according to the plurality of feature object point sets. The plurality of pieces of scanned feature object information is compared with the preset feature object information, and a levelness check result of the current scanning direction angle is obtained. Based on this, the point cloud data obtained through the scan are segmented into the plurality of feature object point sets. Each of the feature object point sets may correspond to one feature object, then features are extracted according to the feature object point sets, and the plurality of pieces of scanned feature object information is obtained. Then, the scanned feature object information is compared with actual information of the preset feature. When a scanning plane is level, actual information of the preset feature may be restored from the scanned feature object information. That is, when the scanned feature object information is consistent with the preset feature object information, the scanning plane is level. When the scanned feature object information is inconsistent with the preset feature object information, the scanning plane inclines to a particular degree.

It can be understood by those skilled in the art that all or some of the steps and systems in the method disclosed above may be implemented as software, firmware, hardware or their appropriate combinations. Some physical components or all physical components may be implemented as software executed by the processor, such as a central processing unit, a digital signal processor or a microprocessor, or implemented as hardware, or implemented as an integrated circuit, such as an application-specific integrated circuit. Such software may be distributed on the computer-readable medium. The computer-readable medium may include a computer storage medium (or a non-transitory medium) and a communication medium (or a transitory medium). As well known to those skilled in the art, the term computer storage medium includes volatile or nonvolatile, and removable or non-removable media implemented in any method or technology for storing information (such as a computer-readable program, a data structure, a program module or other data). The computer storage medium includes, but is not limited to, a random access memory (RAM), a read only memory (ROM), an electrically erasable programmable read-only memory (EEPROM), a flash memory or other memory technologies, a compact disc read-only memory (CD-ROM), a digital versatile disc (DVD) or other optical disk storages, magnetic cassettes, magnetic tapes, magnetic disk storages or other magnetic storage apparatuses, or any other medium that may be configured to store desired information and may be accessed by computers. In addition, it is well known to those skilled in the art that the communication medium typically includes the computer-readable program, the data structure, the program module or other data in, for example, a carrier wave or a modulated data signal of another transmission mechanism, and may include any information delivery medium.

The description described above is about particular description of several implementations of the application, but the application is not limited to the embodiments described above. Those skilled in the art can make various equivalent variations or substitutions without violating the essential sharing conditions of the application, and these equivalent variations or substitutions should fall within in the scope defined by the claims of the application.

## Claims

1. A method for verifying levelness, comprising:
acquiring point cloud data of a current scanning direction angle;
extracting a plurality of feature object point sets from the point cloud data;
obtaining a plurality of pieces of scanned feature object information according to the plurality of feature object point sets; and
comparing the plurality of pieces of scanned feature object information with preset feature object information to obtain a levelness check result of the current scanning direction angle, wherein
the feature object point set is a set composed of all points obtained from the same feature object in the point cloud data.

2. The method according to claim 1, wherein after the comparing the plurality of pieces of scanned feature object information with preset feature object information to obtain a levelness check result of the current scanning direction angle, the method further comprises:
checking whether a number of levelness check results is less than a preset number threshold; and
in a case that the number of levelness check results is less than the preset number threshold, rotating by a preset angle degree in a preset direction to adjust a scanning direction angle, and returning to execute the step of obtaining point cloud data of a current scanning direction angle.

3. The method according to claim 1, wherein the point cloud data comprise a plurality of signal points and spatial coordinates of each of the signal points.

4. The method according to claim 3, wherein when the scanned feature object information comprises a number of scanned feature objects and spatial coordinates of the scanned feature objects, the obtaining a plurality of pieces of scanned feature object information according to the plurality of feature object point sets comprises:
obtaining the number of scanned feature objects according to a number of feature object point sets; and
determining the spatial coordinates of each of the scanned feature objects according to an average of spatial coordinates of all signal points in each of the feature object point sets.

5. The method according to claim 4, wherein when the point cloud data further comprise a light intensity of each of the signal points, the extracting a plurality of feature object point sets from the point cloud data comprises:
extracting all signal points having light intensities greater than a preset light intensity threshold from the point cloud data, and taking the signal points as feature points;
establishing feature point data sets from all the feature points; and
performing clustering segmentation on the feature point data sets to obtain the plurality of feature object point sets.

6. The method according to claim 5, wherein when the scanned feature object information further comprises a length of each of the scanned feature objects, the obtaining a plurality of pieces of scanned feature object information according to the plurality of feature object point sets further comprises:
ranking, according to the spatial coordinates of the feature points, all feature points that fall into the same feature object point set through clustering segmentation;
determining a start end point and a tail end point of the feature object point set according to ranking, wherein the start end point is a feature point ranked first in the feature object point set, and the tail end point is a feature point ranked last in the feature object point set; and
computing a distance between the start end point and the tail end point according to spatial coordinates of the start end point and spatial coordinates of the tail end point, and taking the distance as the length of the scanned feature object.

7. The method according to claim 6, wherein when the preset feature object information comprises a number of preset feature objects, a length of the preset feature objects, and spatial coordinates of the preset feature objects, the comparing the plurality of pieces of scanned feature object information with preset feature object information to obtain a levelness check result of the current scanning direction angle comprise:
when at least one of conditions that the number of scanned feature objects is unequal to the number of preset feature objects, the spatial coordinates of the scanned feature objects do not coincide with the spatial coordinates of the preset feature objects, and a difference between the length of the scanned feature objects and the length of the preset feature objects is greater than a preset length difference threshold occurs, determining that the levelness check result of the current scanning direction angle is unqualified.

8. The method according to claim 1, wherein the extracting a plurality of feature object point sets from the point cloud data further comprises:
performing model fitting on the point cloud data according to a preset feature object model; and
segmenting the point cloud data according to a result of the model fitting to obtain the plurality of feature object point sets.

9. The method according to claim 8, wherein when the scanned feature object information further comprises a shape feature of scanned feature objects, the obtaining a plurality of pieces of scanned feature object information according to the plurality of feature object point sets comprises:
obtaining a number of scanned feature objects according to a number of feature object point sets, wherein the feature object point sets are obtained by performing model fitting and segmentation on the point cloud data;
generating a two-dimensional model according to the feature object point sets; and
extracting a shape feature of the two-dimensional model, wherein the shape feature comprises at least one of a length of a line segment, a curvature and a length of a curve, and a degree of an included angle formed between every two of a plurality of line segments.

10. The method according to claim 9, wherein the comparing the scanned feature object information with preset feature object information to obtain a levelness check result comprise:
comparing the number of feature object point sets with a number of preset feature objects;
comparing the shape feature of the scanned feature objects with a shape feature of the preset feature objects; and
when at least one of conditions that the number of feature object point sets is unequal to the number of preset feature objects or the shape feature of the scanned feature objects is inconsistent with the shape feature of the preset feature objects occurs, determining that the levelness check result is unqualified.

11. A terminal, comprising: a memory, a processor, and a computer program that is stored on the memory and runnable on the processor, wherein the processor is configured to cause, when executed by a processor, the processor to perform the method for checking levelness as claimed in any one of claims 1 to 10.

12. A computer-readable storage medium, storing a computer-executable program, wherein the computer-executable program is configured to cause a computer to execute the method for checking levelness as claimed in any one of claims 1 to 10.
